# EUROPEAN PATENT SPECIFICATION

(11) **EP 4 010 208 B1**
(45) Date of publication and mention of the grant of the patent: **09.07.2025**
(21) Application number: 20849926.9
(22) Date of filing: 28.07.2020
(51) Int. Cl.: B60C 23/04, B29D 30/00

(54) **TIRE ELECTRONICS ASSEMBLY**
REIFENELEKTRONIKANORDNUNG
ENSEMBLE ÉLECTRONIQUE DE PNEU

(30) Priority: 05.08.2019 US 201962882790 P
(43) Date of publication of application: 15.06.2022
(73) Proprietor: Bridgestone Americas Tire Operations, LLC, Nashville, TN 37201 (US)
(72) Inventor: SCHEIFELE, Kevin E., Atwater, Ohio 44201 (US); DORFI, Hans R., Akron, Ohio 44303 (US)
(74) Representative: Kraus & Lederer PartGmbB
(86) International application number: PCT/US2020/043807
(87) International publication number: WO 2021/025895

(56) References cited:
- EP-A1- 2 988 109
- EP-A1- 3 264 491
- JP-A- 2017 154 648
- JP-A- 2017 154 648
- KR-A- 20170 023 606
- US-A- 4 133 592
- US-A1- 2011 132 649
- US-A1- 2017 341 475
- US-A1- 2018 297 424
- US-A1- 2018 297 424
- US-A1- 2019 047 336

## Description

### FIELD OF THE INVENTION

This technology includes electronic devices for sensing conditions of a tire on a vehicle.

### BACKGROUND

Electronic devices can be used to sense conditions of a tire on a vehicle. Such devices include air pressure and temperature sensors that are mounted inside the tire, and also include radio frequency transmitters for transmitting pressure and temperature signals from the tire to the vehicle.
An apparatus for use with a tire including electronic devices are known, for instance, from document US 2011/132649 A1. Furthermore, apparatuses for use with a tire having mechanical attachment elements are known, for instance, from US 4 133 592 A.

### SUMMARY

An electronics assembly is provided for use with a tire according to claim 1. The assembly includes a base and a plurality of modules. The base is configured for mechanical attachment to the tire and includes an electronic device. The base also includes a mechanical attachment element. Each module includes an electronic device, a lower mechanical attachment element, and an upper mechanical attachment element.

The lower mechanical attachment element on each one of the modules is configured to attach to the upper mechanical attachment element on any other one of the modules. In this configuration, the modules are interchangeably mechanically attachable to each other in a stacked arrangement.

The lower mechanical attachment element on each one of the modules is also configured to attach to the mechanical attachment element on the base. The modules are thus mechanically attachable to the base interchangeably with each other, which enables any one of the modules to be installed as the lowermost module in the stacked arrangement.

Additionally, a lower electrical contact on each one of the modules is configured to electrically connect with an upper electrical contact on any other one of the modules. In this configuration, the modules are interchangeably electrically connectable with each other in the stacked arrangement. The lower electrical contact on each one of the modules is further configured to connect electrically with an electrical contact on the base, whereby the modules are interchangeably electrically connectable with the base as the lowermost module in the stacked arrangement.

In an illustrated embodiment, the base is configured to overlie an interior surface of the tire. Another illustrated embodiment includes a base configured for embedded installation within the tire. In yet another embodiment the base is configured for installation between layers of the tire.

### BRIEF DESCRIPTION OF THE DRAWINGS

**FIG. 1** is a schematic sectional view of a tire and an electronics assembly for use with the tire.
**FIG. 2** is an exploded view of parts of the electronic assembly of **FIG. 1****.**
**FIG. 3** is a schematic sectional view of an alternative embodiment of a tire and an electronics assembly for use with the tire.
**FIG. 4** is a schematic sectional view of alternative embodiment of a tire and an electronics assembly for use with the tire.
**FIG. 5** is a schematic sectional view of an alternative embodiment of a tire and an electronics assembly for use with the tire.
**FIG. 6** is a schematic sectional view of an alternative embodiment of a tire and an electronics assembly for use with the tire.
**FIG. 7** is a schematic sectional view of an alternative embodiment of a tire and an electronics assembly for use with the tire.

### DETAILED DESCRIPTION

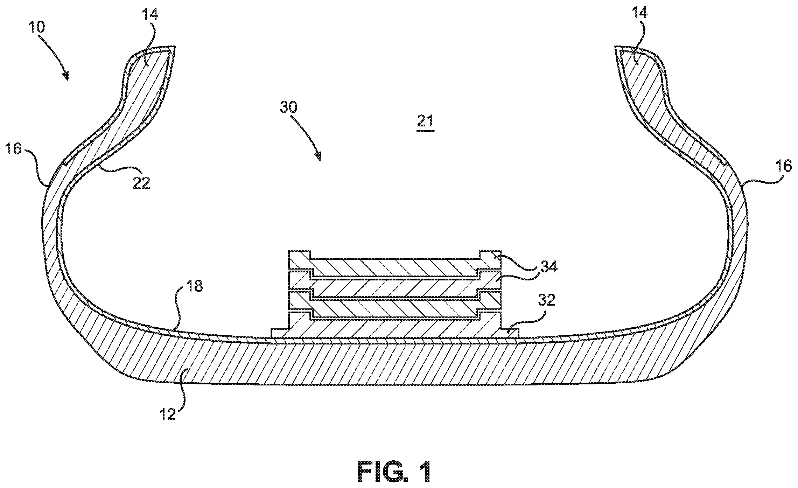

As shown in **FIG. 1****,** a pneumatic tire **10** includes a tread **12,** bead portions **14,** and sidewalls **16** interconnecting the tread **12** with the bead portions **14.** An inner surface **18** of the tire **10** defines the periphery of a cavity **21** within the tire **10.** The inner surface **18** in this example is provided by an innerliner **22** that reaches fully throughout the interior of the tread **12,** the bead portions **14,** and the sidewalls **16.**

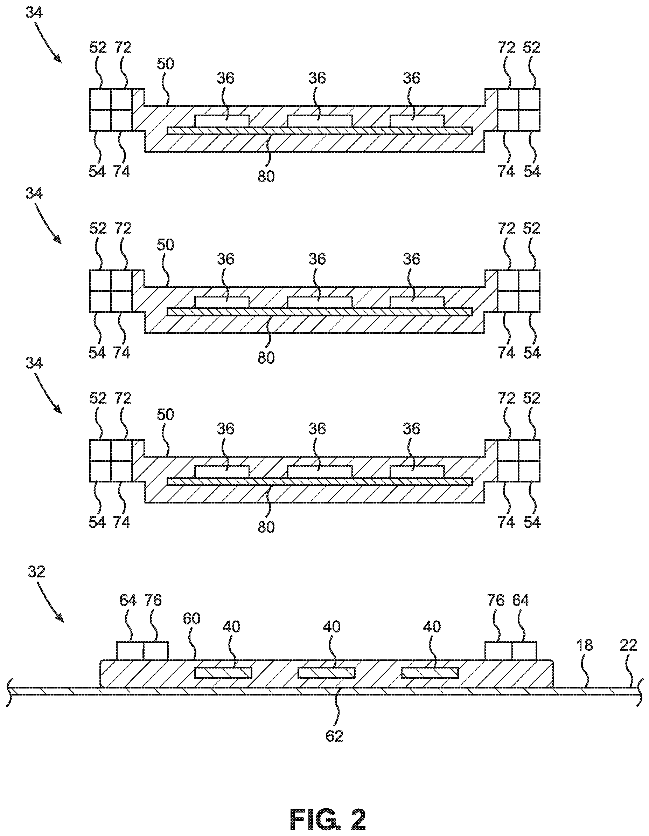

Also shown in **FIG. 1** is an electronics assembly **30** for use with the tire **10.** The electronics assembly **30** in this example includes a base **32** and multiple modules **34.** As shown schematically in **FIG. 2****,** each module **34** includes one or more electronic devices **36.** The devices **36** in the modules **34** may include air pressure sensors, temperature sensors, power generation or storage devices, radio frequency transmitters, radio frequency receivers, and/or any other electronic devices suitable for obtaining and/or providing information relating to conditions of the tire **10.**

The base **32** also includes one or more electronic devices **40** (**FIG. 2**). These may include an electronic device **40** configured to provide a unique identification signal for identifying the tire **10** in distinction from another tire on the same vehicle or a different vehicle. Other electronic devices **40** in the base **32** may be configured to receive and/or transmit signals between the devices **40** in the base, the devices **36** in the modules **34,** and the vehicle. In each case, the electronic devices **36** and **40** may be configured in any suitable manner known in the art.

As shown separately in **FIG. 2****,** each of the modules **34** of **FIG. 1** includes a panel-shaped housing **50** containing the respective electronic devices **36.** Upper mechanical attachment elements **52** face upward from each housing **50.** Lower mechanical attachment elements **54** face downward from each housing **50.** The lower mechanical attachment elements **54** on each one of the housings **50** are configured to releasably mechanically attach to the upper mechanical attachment elements **52** on any other one of the housings **50.** Accordingly, the modules **34** are interchangeably mechanically attachable to each other in a stacked arrangement, as shown for example in **FIG. 1****.** The mechanical attachment elements **52** and **54** shown schematically in the drawings can be configured to accomplish the releasable attachments in any suitable manner known in the art of interconnecting modular structures.

The base **32** of the electronics assembly **30** is attached to the tire **10** at the interior of the tire **10.** As shown schematically in **FIG. 2****,** the base **32** includes a panel-shaped housing **60** containing the electronic devices **40.** The housing **60** has a lower side surface **62** adhered to the inner surface **18** of the tire **10.** Mechanical attachment elements **64** face upward from the housing **60.** The lower mechanical attachment elements **54** on any one of the modules **34** can releasably mechanically attach to the mechanical attachment elements **64** on the base **32.** This enables any one of the modules **34** to be installed as the lowermost module **34** in the stack shown in **FIG. 1****.**

In addition to the mechanical attachment elements **52** and **54,** each module **34** also has upper electrical contacts **72** facing upward from the housing **50,** and lower electrical contacts **74** facing downward from the housing **50.** The lower electrical contacts **74** on each one of the modules **34** are configured to releasably electrically connect with the upper electrical contacts **72** on any other one of the housings **50.** This enables the modules **34** to be interchangeably electrically connectable with each other in the stack of **FIG. 1****.** The electrical contacts **72** and **74** shown schematically in the drawings can be provided as pin and socket connectors that also function as the mechanical attachment elements **52** and **54** described above. In other embodiments the electrical contacts **72** and **74** can be configured to accomplish the releasable electrical connections in any suitable manner known in the art of electrical contacts.

The base **32** has electrical contacts **76** facing upward from the housing **60.** Like the electrical contacts **72** and **74** on the modules **34,** the electrical contacts **76** on the base **32** can include pin and socket connectors that double as the mechanical attachment elements **64.** The lower electrical contacts **74** on any one of the module housings **50** can releasably electrically connect with the electrical contacts **76** on the base **32.** Any one of the modules **34** can thus function as the lowermost module **34** in the stack of **FIG. 1****.**

As further shown schematically in **FIG. 2****,** the electrical devices **36** in the modules **34** are mounted on printed circuit boards **80.** Each printed circuit board **80** is configured to electrically connect the devices **36** in the respective module **34** in series with the devices **36** in any other two of the modules **34.** Each printed circuit board **80** is further configured to electrically connect the devices **36** in the respective module **34** in series with the devices **40** in the base **32.**

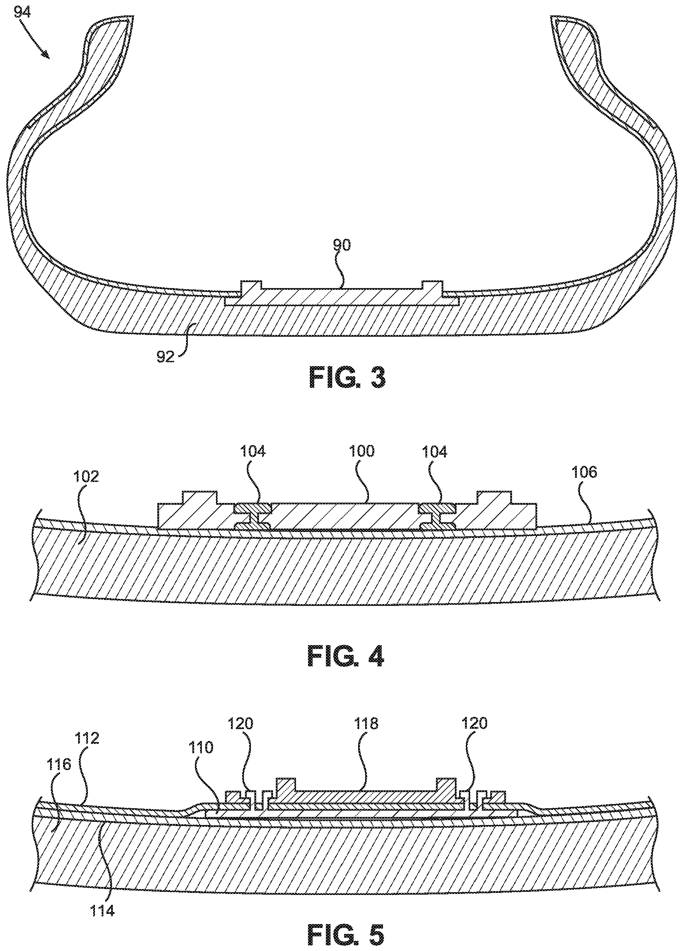

**FIGS. 3-5** show alternative embodiments of a base for use with modules like the modules **34** of **FIGS. 1** and **2****.** As shown in **FIG. 3****,** a base **90** that is substantially the same as the base **32** is embedded within the body of the tire in the tread portion **92** of a tire **94.** As shown in **FIG. 4****,** a base **100** is attached to a tire **102** by fasteners **104** that are attached to an innerliner **106.** As shown in **FIG. 5****,** a support platform **110** is installed between layers **112** and **114** of a tire **116.** The base **118** in this embodiment is mounted over the innermost layer **112** of the tire **116** and is retained in place by fasteners **120** projecting from the support platform **110** through the innermost layer **112.**

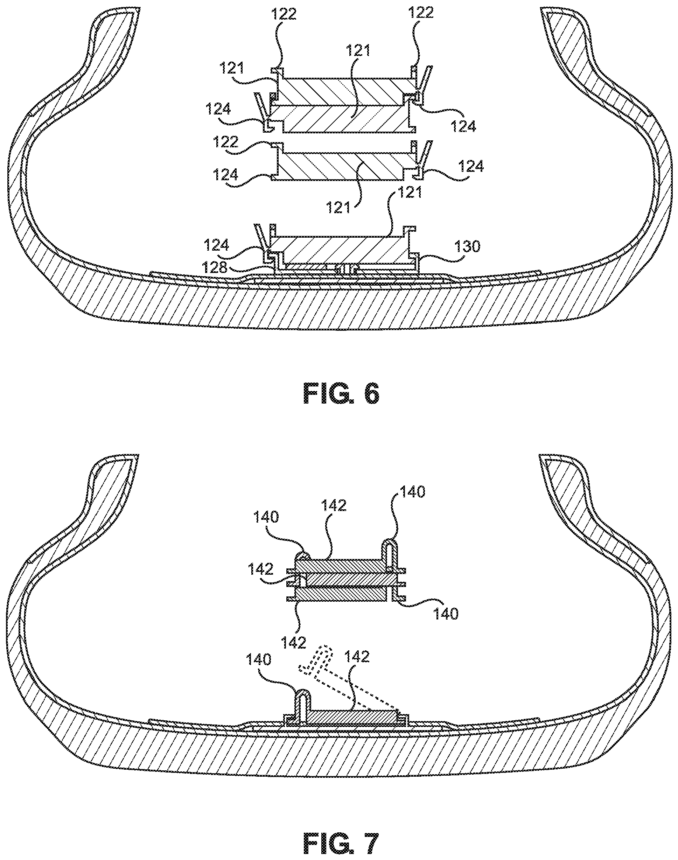

In the alternative embodiment of **FIG. 6****,** the modules **121** have upper mechanical attachment elements **122** and lower attachment elements **124.** One of the lower mechanical attachment elements **124** on each module **121** is configured as a flexible hook for snapping into releasable interlocked engagement with one of the upper mechanical attachment elements **122** on any other one of the modules **121.** Those lower attachment elements **124** can likewise snap into engagement with complimentary attachment element **128** on a base structure **130.** The embodiment of **FIG. 7** also has flexible mechanical attachment elements **140** for each module **142** to snap into engagement with any other module **142** or with the base structure **144.**

## Claims

1. An apparatus for use with a tire (10, 94, 102, 116), comprising:
a base (32, 90, 100, 118) configured for mechanical attachment to the tire (10, 94, 102, 116), the base (32, 90, 100, 118) including an electronic device (40) and a mechanical attachment element (64, 128); and
a plurality of modules (34, 121, 142), each of which includes an electronic device (36), a lower mechanical attachment element (54, 124), and an upper mechanical attachment element (52, 122);
wherein the lower mechanical attachment element (54, 124) on each one of the modules (34, 121, 142) is configured to mechanically attach to the upper mechanical attachment element (52, 122) on any other one of the modules (34, 121, 142), whereby the modules (34, 121, 142) are interchangeably mechanically attachable to each other; and
the lower mechanical attachment element (54, 124) on each one of the modules (34, 121, 142) is configured to mechanically attach to the mechanical attachment element (64, 128) on the base (32, 90, 100, 118), whereby the modules (34, 121, 142) are interchangeably mechanically attachable to the base (32, 90, 100, 118).

2. An apparatus as defined in claim 1, wherein the electronic device (40) in the base (32, 90, 100, 118) is configured to provide a unique identification signal identifying the tire (10, 94, 102, 116).

3. An apparatus as defined in claim 1 or claim 2, wherein the base (90) is configured for embedded installation within the tire (10, 94, 102, 116).

4. An apparatus as defined in claim 1 or claim 2, wherein the base (118) is configured for installation between layers (112, 114) of the tire (10, 94, 102, 116).

5. An apparatus as defined in any one of claims 1 to 4, wherein the base (32, 90, 100, 118) further includes an electrical contact (76), each module (34, 121, 142) includes a lower electrical contact (74), and each module (34, 121, 142) further includes an upper electrical contact (72);
wherein the lower electrical contact (74) on each one of the modules (34, 121, 142) is configured to electrically connect with the upper electrical contact (72) on any other one of the modules (34, 121, 142), whereby the modules (34, 121, 142) are interchangeably electrically connectable with each other; and
the lower electrical contact (74) on each one of the modules (34, 121, 142) is configured to connect electrically with the electrical contact (76) on the base (32, 90, 100, 118), whereby the modules (34, 121, 142) are interchangeably electrically connectable with the base (32, 90, 100, 118).

6. An apparatus as defined in claim 5, wherein each one of the modules (34, 121, 142) includes circuitry configured to electrically connect any other two of the modules (34, 121, 142) in series with one another.

7. An apparatus as defined in claim 5, wherein each one of the modules (34, 121, 142) includes circuitry configured to electrically connect any one of the modules (34, 121, 142) in series with the base (32, 90, 100, 118).

## Patentansprüche

1. Einrichtung zur Verwendung mit einem Reifen (10, 94, 102, 116), umfassend:
eine Basis (32, 90, 100, 118), die zur mechanischen Befestigung am Reifen (10, 94, 102, 116) konfiguriert ist, wobei die Basis (32, 90, 100, 118) eine elektronische Vorrichtung (40) und ein mechanisches Befestigungselement (64, 128) einschließt; und
eine Vielzahl von Modulen (34, 121, 142), von denen jedes eine elektronische Vorrichtung (36), ein unteres mechanisches Befestigungselement (54, 124) und ein oberes mechanisches Befestigungselement (52, 122) einschließt;
wobei das untere mechanische Befestigungselement (54, 124) an jedem der Module (34, 121, 142) konfiguriert ist, mechanisch an dem oberen mechanischen Befestigungselement (52, 122) an jedem anderen der Module (34, 121, 142) befestigt zu werden, wodurch die Module (34, 121, 142) austauschbar mechanisch aneinander befestigbar sind; und
das untere mechanische Befestigungselement (54, 124) an jedem der Module (34, 121, 142) konfiguriert ist, mechanisch an dem mechanischen Befestigungselement (64, 128) an der Basis (32, 90, 100, 118) befestigt zu werden, wodurch die Module (34, 121, 142) austauschbar mechanisch an der Basis (32, 90, 100, 118) befestigbar sind.

2. Einrichtung nach Anspruch 1, wobei die elektronische Vorrichtung (40) in der Basis (32, 90, 100, 118) konfiguriert ist, ein eindeutiges Identifikationssignal bereitzustellen, das den Reifen (10, 94, 102, 116) identifiziert.

3. Einrichtung nach Anspruch 1 oder Anspruch 2, wobei die Basis (90) für eine eingebettete Installation im Reifen (10, 94, 102, 116) konfiguriert ist.

4. Einrichtung nach Anspruch 1 oder Anspruch 2, wobei die Basis (118) für die Installation zwischen den Schichten (112, 114) des Reifens (10, 94, 102, 116) konfiguriert ist.

5. Einrichtung nach einem der Ansprüche 1 bis 4, wobei die Basis (32, 90, 100, 118) ferner einen elektrischen Kontakt (76) einschließt, jedes Modul (34, 121, 142) einen unteren elektrischen Kontakt (74) einschließt und jedes Modul (34, 121, 142) ferner einen oberen elektrischen Kontakt (72) einschließt;
wobei der untere elektrische Kontakt (74) an jedem der Module (34, 121, 142) konfiguriert ist, mit dem oberen elektrischen Kontakt (72) an jedem anderen der Module (34, 121, 142) elektrisch verbunden zu werden, wodurch die Module (34, 121, 142) austauschbar elektrisch miteinander verbindbar sind; und
der untere elektrische Kontakt (74) an jedem der Module (34, 121, 142) konfiguriert ist, mit dem elektrischen Kontakt (76) an der Basis (32, 90, 100, 118) elektrisch verbunden zu werden, wodurch die Module (34, 121, 142) austauschbar elektrisch mit der Basis (32, 90, 100, 118) verbindbar sind.

6. Einrichtung nach Anspruch 5, wobei jedes der Module (34, 121, 142) eine Schaltlogik einschließt, die konfiguriert ist, zwei beliebige andere Module (34, 121, 142) elektrisch in Reihe miteinander zu verbinden.

7. Einrichtung nach Anspruch 5, wobei jedes der Module (34, 121, 142) eine Schaltlogik einschließt, die konfiguriert ist, jedes der Module (34, 121, 142) elektrisch in Reihe mit der Basis (32, 90, 100, 118) zu verbinden.

## Revendications

1. Appareil destiné à être utilisé avec un pneu (10, 94, 102, 116), comprenant :
une base (32, 90, 100, 118) conçue pour une fixation mécanique au pneu (10, 94, 102, 116), la base (32, 90, 100, 118) incluant un dispositif électronique (40) et un élément de fixation mécanique (64, 128) ; et
une pluralité de modules (34, 121, 142), dont chacun comporte un dispositif électronique (36), un élément de fixation mécanique inférieur (54, 124) et un élément de fixation mécanique supérieur (52, 122) ;
dans lequel l'élément de fixation mécanique inférieur (54, 124) sur chacun des modules (34, 121, 142) est conçu pour être fixé mécaniquement à l'élément de fixation mécanique supérieur (52, 122) sur n'importe quel autre module (34, 121, 142), les modules (34, 121, 142) pouvant ainsi être fixés mécaniquement l'un à l'autre de manière interchangeable ; et
l'élément de fixation mécanique inférieur (54, 124) sur chacun des modules (34, 121, 142) est conçu pour être fixé mécaniquement à l'élément de fixation mécanique (64, 128) sur la base (32, 90, 100, 118), les modules (34, 121, 142) pouvant être fixés mécaniquement de manière interchangeable à la base (32, 90, 100, 118).

2. Appareil selon la revendication 1, dans lequel le dispositif électronique (40) dans la base (32, 90, 100, 118) est configuré pour fournir un signal d'identification unique identifiant le pneu (10, 94, 102, 116).

3. Appareil selon la revendication 1 ou la revendication 2, dans lequel la base (90) est conçue pour être encastrée dans le pneu (10, 94, 102, 116).

4. Appareil selon la revendication 1 ou la revendication 2, dans lequel la base (118) est conçue pour être installée entre les couches (112, 114) du pneu (10, 94, 102, 116).

5. Appareil selon l'une quelconque des revendications 1 à 4, dans lequel la base (32, 90, 100, 118) comporte en outre un contact électrique (76), chaque module (34, 121, 142) comporte un contact électrique inférieur (74), et chaque module (34, 121, 142) comporte en outre un contact électrique supérieur (72) ;
dans lequel le contact électrique inférieur (74) sur chacun des modules (34, 121, 142) est configuré pour se connecter électriquement au contact électrique supérieur (72) sur n'importe quel autre module (34, 121, 142), les modules (34, 121, 142) pouvant ainsi être connectés électriquement les uns aux autres de manière interchangeable ; et
le contact électrique inférieur (74) sur chacun des modules (34, 121, 142) est configuré pour se connecter électriquement au contact électrique (76) sur la base (32, 90, 100, 118), de telle manière que les modules (34, 121, 142) peuvent être connectés électriquement à la base (32, 90, 100, 118) de manière interchangeable.

6. Appareil selon la revendication 5, dans lequel chacun des modules (34, 121, 142) comporte des circuits configurés pour connecter électriquement deux autres modules (34, 121, 142) en série l'un avec l'autre.

7. Appareil selon la revendication 5, dans lequel chacun des modules (34, 121, 142) comporte un circuit configuré pour connecter électriquement n'importe lequel des modules (34, 121, 142) en série avec la base (32, 90, 100, 118).
